# EUROPEAN PATENT SPECIFICATION

(11) **EP 3 451 153 B1**
(45) Date of publication and mention of the grant of the patent: **18.11.2020**
(21) Application number: 16899901.9
(22) Date of filing: 05.05.2016
(51) Int. Cl.: G06F 7/544

(54) **APPARATUS AND METHOD FOR EXECUTING TRANSCENDENTAL FUNCTION OPERATION OF VECTORS**
VORRICHTUNG UND VERFAHREN ZUR AUSFÜHRUNG EINER TRANSZENDENTEN FUNKTIONSOPERATION VON VEKTOREN
APPAREIL ET PROCÉDÉ D'EXÉCUTION D'UNE OPÉRATION DE FONCTION TRANSCENDANTE DE VECTEURS

(30) Priority: 26.04.2016 CN 201610266916
(43) Date of publication of application: 06.03.2019
(73) Proprietor: Cambricon Technologies Corporation Limited, Beijing 100190 (CN)
(72) Inventor: HAN, Dong, Beijing 100190 (CN); ZHANG, Xiao, Beijing 100190 (CN); CHEN, Tianshi, Beijing 100190 (CN); CHEN, Yunji, Beijing 100190 (CN)
(74) Representative: AWA Sweden AB
(86) International application number: PCT/CN2016/081071
(87) International publication number: WO 2017/185390

(56) References cited:
- CN-A- 101 630 243
- CN-A- 102 722 469
- CN-A- 102 799 412
- CN-A- 103 677 738
- US-A1- 2004 015 882
- US-A1- 2014 317 376
- Tanya Vladimirova ET AL: "Floating-Point Mathematical Co-Processor for a Single-Chip On-Board Computer", , 1 September 2003 (2003-09-01), XP055636781, Retrieved from the Internet: URL:https://pdfs.semanticscholar.org/4023/ 62c2b5619947d14b988539e9ca5c02959e63.pdf [retrieved on 2019-10-29]
- Aman Chadha ET AL: "Design and Simulation of an 8-bit Dedicated Processor for calculating the Sine and Cosine of an Angle using the CORDIC Algorithm", , 4 November 2011 (2011-11-04), XP055636773, Retrieved from the Internet: URL:https://arxiv.org/ftp/arxiv/papers/111 1/1111.1086.pdf [retrieved on 2019-10-29]
- ANDRAKA R ED - ASSOCIATION FOR COMPUTING MACHINERY: "SURVEY OF CORDIC ALGORITHMS FOR FPGA BASED COMPUTERS", ACM/SIGDA INTERNATIONAL SYMPOSIUM ON FIELD PROGRAMMABLE GATE ARRAYS. FPGA '98. MONTEREY, CA, FEB. 22 - 24, 1998; [ACM/SIGDA INTERNATIONAL SYMPOSIUM ON FIELD PROGRAMMABLE GATE ARRAYS], NEW YORK, NY : ACM, US, vol. 6TH CONF, 22 February 1998 (1998-02-22), pages 191-200, XP000883995, DOI: 10.1145/275107.275139 ISBN: 978-0-89791-978-4
- MEHER P K ET AL: "50 Years of CORDIC: Algorithms, Architectures, and Applications", IEEE TRANSACTIONS ON CIRCUITS AND SYSTEMS I: REGULAR PAPERS, IEEE, US, vol. 56, no. 9, 1 September 2009 (2009-09-01), pages 1893-1907, XP011333527, ISSN: 1549-8328, DOI: 10.1109/TCSI.2009.2025803

## Description

### TECHNICAL FIELD

This disclosure relates to the technical field of computer processing, and more particularly to an apparatus and a method for executing a transcendental function operation on vectors. The apparatus can execute various transcendental function operations on a set of vector data according to instructions and can obtain a high-accuracy result of the transcendental function operation with high efficiency. The apparatus and the method of the present disclosure have significant advantages over related methods in executing the transcendental function operations on the vectors.

### BACKGROUND

Transcendental function operations include but are not limited to exponential operations, logarithmic operations, and trigonometric function operations. The transcendental function operation is different from traditional four arithmetic operations and is not a finite polynomial. In the transcendental function operation, a relationship between variables cannot be expressed by a finite number of addition, subtraction, multiplication, division, power, and square, and therefore, computational difficulties and cost of the transcendental function operation far exceed that of the traditional four arithmetic operations. However, in the current computer field, there exist many requirements for executing some transcendental function operations on a whole column of vector data or even vector data. For example, in many machine learning schemes, a large amount of data may need to be subjected to exponential operations and logarithmic operations. Therefore, it is desirable to provide an apparatus and method that can efficiently implement various transcendental function operations for vector data.

In the related art, one of the most common solutions is to use a general-purpose processor to execute transcendental function operations on vectors. In this situation, a vector operation may be executed by executing a general-purpose instruction through a general-purpose register file and an universal function component. However, the general-purpose processor has no arithmetic component specifically for executing the transcendental function operation, and therefore a result of the transcendental function operation may be approximately approached by using high-order polynomials in the form of Taylor expansion. In this case, it requires multiple instructions to complete the entire operation. In addition, since the general-purpose processor is oriented to scalar operations, when implementing the transcendental function operation on the vector data, the vector data needs to be executed one by one, which further reduces the computational efficiency.

In another related art, a graphics processing unit (GPU) may be used to execute the transcendental function operations on the vector data. In this situation, the transcendental function operation can be executed by executing a general-purpose single instruction multiple data (SIMD) instruction through the general-purpose register file and a general-purpose flow processing unit. With aid of this solution, although the problem of serial computing of the general-purpose processor described above can be solved, it still needs to use the Taylor expansion method to obtain high-precision results by using high-order polynomials. On the other hand, because on-chip cache of the GPU is too small, it is necessary to continuously move off-chip data when executing large-scale transcendental function operations. Therefore, an off-chip bandwidth will be a main trouble affecting the performance of the GPU.

In another related art, vector transcendental function operations can be executed with a special computing apparatus. In particular, operations can be executed with a customized register file and a customized processing unit. However, limited by a design of the register file, the existing dedicated transcendental function operation apparatus is unable to flexibly support vector operations on data of different lengths.

As can be seen, flexible or efficient vector transcendental function operations cannot be executed by the existing general-purpose processors, GPUs, or other customized computing apparatus. Further, executing vector multiplication operations by using related art will lead to problems such as excessive codes, slow speed, low efficiency, insufficient on-chip cache, and inflexible vector sizes.

"Floating-Point Mathematical Co-Processor for a Single-Chip On-Board Computer" (Tanya Vladimirova et al.) describe a design of a 32-bit floating-point mathematical co-processor core using the CORDIC algorithm. The core implements the main arithmetic operations of addition, subtraction, multiplication and division, as well as 13 elementary functions.

US 2014/0317376 (LSI Corporation) describe a digital processor, such as a vector processor or a scalar processor, having an instruction set with a complex angle function.

### SUMMARY

The disclosure aims to provide an apparatus and a method for executing a transcendental function operation on vectors, which is capable of quickly and flexibly executing various transcendental function operations for vector data of different lengths according to instructions. For example, for vector *X,* for each element *xi* in *X,* a transcendental function value will be quickly calculated through *yi*=*f(xi),* where *f* can express various transcendental functions including but not limited to, exponential functions, logarithmic functions, trigonometric functions, inverse trigonometric functions, or the like.

According to a first aspect of the disclosure, an apparatus for executing a transcendental function operation on vectors is provided. The apparatus includes a storing unit, a register unit, a control unit, and a transcendental function calculating unit. The storing unit is configured to store vector data associated with a vector operation instruction. The register unit is configured to store scalar data associated with the vector operation instruction. The control unit is configured to decode the vector operation instruction and to control an operation process of the vector operation instruction. The transcendental function calculating unit is configured to execute a transcendental function operation on the vector operation instruction. The transcendental function calculating unit includes a preprocessing section and an iterative calculating section. The preprocessing section is configured to preprocess input vector data whereby a coordinate rotation digital computer (CORDIC) scheme is able to process the input vector data preprocessed, and the iterative calculating section is configured to execute an iterative operation on the input vector data preprocessed by using the CORDIC scheme to obtain result vector data.

Optionally, the transcendental function calculating unit is implemented in hardware.

Optionally, the storing unit is a scratchpad memory.

Optionally, the scalar data stored in the register unit include a start address of the input vector data, a storage address of output vector data, and a length of the input vector data associated with the vector operation instruction, where the start address of the input vector data and the storage address of the output vector data are addresses in the storing unit.

Optionally, the transcendental function calculating unit further includes a post-processing section configured to post-process the result vector data output from the iterative calculating section.

Optionally, the control unit includes an instruction queue module. The instruction queue module is configured to store sequentially the decoded vector operation instruction(s) and to acquire the scalar data associated with the vector operation instruction(s).

In one implementation, the control unit includes a dependency relationship processing unit. The dependency relationship processing unit is configured to determine whether a dependency relationship between a current vector operation instruction and an operation instruction that has been partially executed exists, before the transcendental function calculating unit acquires the current vector operation instruction.

In one implementation, the control unit includes a storage queue module. The storage queue module is configured to: temporarily store a current vector operation instruction when a dependency relationship between the current vector operation instruction and an operation instruction that has been partially executed exists and send the current vector operation instruction temporarily stored to the transcendental function calculating unit when the dependency relationship is eliminated.

Optionally, the apparatus further includes an instruction cache unit and an input-output (IO) unit. The instruction cache unit is configured to store a vector operation instruction to be executed. The IO unit is configured to store in the storing unit the vector data associated with the vector operation instruction or to acquire an operation result of the vector operation instruction from the storing unit.

Optionally, the vector operation instruction includes an operation code and an operation field. The operation code is configured to indicate which transcendental function is to be executed. The operation field includes at least one of an immediate and a register number and is configured to indicate the scalar data associated with the vector operation instruction, where the register number is configured to point to an address of the register unit.

According to a second aspect of the disclosure, an apparatus for executing a transcendental function operation on vectors is provided. The apparatus includes an instruction fetching module, a decoding module, an instruction queue module, a scalar register file, a dependency relationship processing unit, a storage queue module, a transcendental function calculating unit, a scratchpad memory, and an input-output (IO) access module. The instruction fetching module is configured to fetch a next vector operation instruction to be executed from a sequence of instructions and to send the vector operation instruction to the decoding module. The decoding module is configured to decode the vector operation instruction and to send the vector operation instruction decoded to the instruction queue module. The instruction queue module is configured to temporarily store the vector operation instruction decoded, to acquire scalar data associated with the vector operation instruction from the vector operation instruction or a scalar register, and to send the vector operation instruction to the dependency relationship processing unit after the scalar data are acquired. The scalar register file includes a plurality of scalar registers and is configured to store the scalar data associated with the vector operation instruction. The dependency relationship processing unit is configured to determine whether a dependency relationship between the vector operation instruction and an operation instruction that has been partially executed exists, and to send the vector operation instruction to the storage queue module based on a determination that the dependency relationship between the vector operation instruction and the operation instruction that has been partially executed exists, or to send the vector operation instruction to the transcendental function calculating unit based on a determination that the dependency relationship between the vector operation instruction and the operation instruction that has been partially executed does not exist. The storage queue module is configured to store the vector operation instruction having the dependency relationship with the operation instruction that has been partially executed and to send the vector operation instruction to the transcendental function calculating unit after the dependency relationship is eliminated. The transcendental function calculating unit is configured to execute a transcendental function operation on input vector data according to the vector operation instruction. The scratchpad memory is configured to store the input vector data and output vector data. The IO access module is configured to read out the input vector data from the scratchpad memory and to write the output vector data into the scratchpad memory by directly accessing the scratchpad memory.

Optionally, the transcendental function calculating unit includes a preprocessing module, an iterative calculating module, and a post-processing module. The preprocessing module is configured to preprocess the input vector data whereby a coordinate rotation digital computer (CORDIC) scheme is able to process the input vector data preprocessed. The iterative calculating module is configured to execute a CORDIC calculation on the input vector data preprocessed to obtain a result of the transcendental function operation. The post-processing module is configured to post-process the result of the transcendental function operation to obtain the output vector data.

Optionally, the transcendental function calculating unit is implemented in hardware.

According to a third aspect of the disclosure, a method for executing a transcendental function operation on vectors. The method includes the following operations. An instruction fetching module fetches a next vector operation instruction to be executed from a sequence of instructions and sends the vector operation instruction to a decoding module. The decoding module decodes the vector operation instruction and sends the vector operation instruction decoded to an instruction queue module. The instruction queue module temporarily stores the vector operation instruction decoded, acquires scalar data associated with the vector operation instruction from the vector operation instruction or a scalar register, and sends the vector operation instruction to a dependency relationship processing unit after the scalar data are acquired. The dependency relationship processing unit determines whether a dependency relationship between the vector operation instruction and an operation instruction that has been partially executed exists, and sends the vector operation instruction to a storage queue module based on a determination that the dependency relationship between the vector operation instruction and the operation instruction that has been partially executed exists, or sends the vector operation instruction to a transcendental function calculating unit based on a determination that the dependency relationship between the vector operation instruction and the operation instruction that has been partially executed does not exist. The storage queue module stores the vector operation instruction having the dependency relationship with the operation instruction that has been partially executed and sends the vector operation instruction to the transcendental function calculating unit after the dependency relationship is eliminated. The transcendental function calculating unit reads out input vector data from a scratchpad memory via an input-output (IO) access module according to the vector operation instruction, executes a transcendental function operation on the input vector data, and writes a result of the transcendental function operation into the scratchpad memory via the IO access module.

In one implementation, the transcendental function calculating unit preprocesses the input vector data whereby a coordinate rotation digital computer (CORDIC) scheme is able to process the input vector data subjected to preprocessing, executes a CORDIC calculation on the input vector data subjected to the preprocessing to obtain the result of the transcendental function operation, and post-processes the result of the transcendental function operation to obtain output vector data.

According to the apparatus of the disclosure, during the vector operation, by temporarily storing the vector data in the scratchpad memory, the vector data of different lengths can be supported more flexibly and efficiently. In addition, since the transcendental function calculating unit is implemented in hardware, various transcendental function operations can be achieved more efficiently and performance of schemes executing a larger amount of transcendental function operation tasks can be improved.

The disclosure can be applied to the following scenarios (including but not limited to): various electronic products such as data processors, robots, computers, printers, scanners, telephones, tablets, smart terminals, mobile phones, driving recorders, navigators, sensors, cameras, cloud servers, cameras, camcorders, projectors, watches, earphones, mobile storages, and wearable devices; aircrafts, ships, cars, and other vehicles; various household appliances such as TVs, air conditioners, microwave ovens, refrigerators, rice cookers, humidifiers, washing machines, electric lights, gas stoves, and range hoods; various types of medical equipment such as nuclear magnetic resonance instruments, B-ultrasound, electrocardiographs, and so on.

### BRIEF DESCRIPTION OF THE DRAWINGS

FIG. 1 is a schematic structural diagram illustrating an apparatus for executing a transcendental function operation on vectors according to an embodiment of the disclosure.
FIG. 2 is a schematic diagram illustrating a format of a transcendental function operation instruction according to an embodiment of the disclosure.
FIG. 3 is a schematic structural diagram illustrating an apparatus for executing a transcendental function operation on vectors according to an embodiment of the disclosure.
FIG. 4 is a flow chart illustrating a process that the apparatus executes a transcendental function operation instruction according to an embodiment of the disclosure.

### DETAILED DESCRIPTION

To describe objectives, technical solutions, and advantages of the embodiments of the present disclosure more clearly, the present disclosure will be further described in detail hereinafter with reference to the embodiments and in accordance with the accompanying drawings of the disclosure.

An apparatus for executing a transcendental function operation on vectors is provided. The apparatus includes a storing unit, a register unit, a control unit, and a transcendental function calculating unit. The storing unit is configured to store vectors. The register unit is configured to store storage addresses of the vectors and other scalar parameters. The control unit is configured to execute a decoding operation and to control each module according to instructions. The transcendental function calculating unit is configured to acquire an address of a vector, a length of the vector, and other parameters from the instruction or the register unit according to operation instructions, to acquire corresponding vector data from the storing unit according to the address and the length of the vector, and to execute a transcendental function operation on the vector data to obtain an operation result. According to the embodiments of the disclosure, the vector data involved in the operation are temporarily stored in a scratchpad memory, so that vector data of different lengths can be flexibly and effectively executed during an operation and execution performance of schemes involving a larger amount of transcendental function operation tasks can be improved.

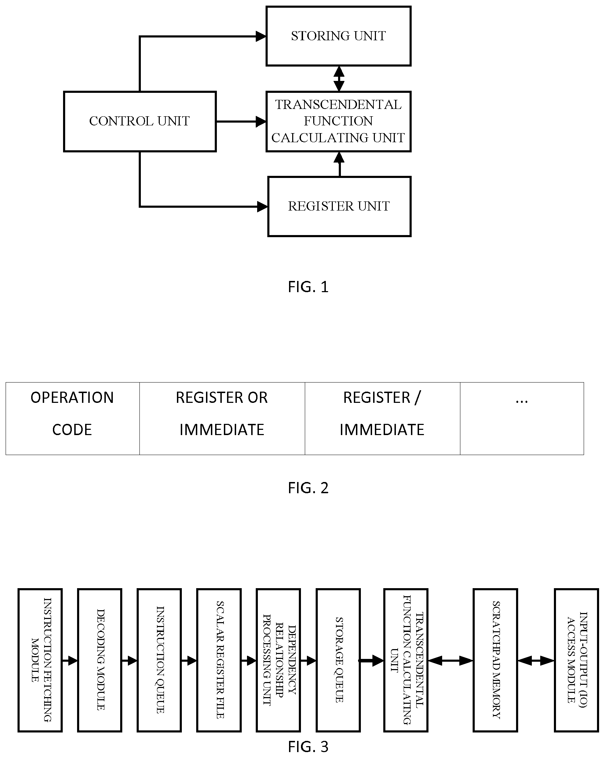

FIG. 1 is a schematic structural diagram illustrating an apparatus for executing a transcendental function operation on vectors according to an embodiment of the disclosure. As illustrated in FIG. 1, the apparatus includes a storing unit, a register unit, a control unit, and a transcendental function calculating unit.

The storing unit is configured to store vector data associated with a vector operation instruction. In one implementation, the storing unit may be a scratchpad memory that can support vector data of different sizes. In the embodiments of the disclosure, necessary computing data are temporarily stored in the scratchpad memory, such that the apparatus of the disclosure can further flexibly and efficiently support data of the different sizes during the transcendental function operation. The scratchpad memory can be implemented by a variety of different memory devices such as a static random-access memory (SRAM), a dynamic random access memory (DRAM), an enhanced dynamic random access memory (eDRAM), a memristor, 3D-DRAM, and a non-volatile memory.

The register unit is configured to store scalar data associated with the vector operation instruction, where the scalar data include a start address of input vector data, a length of the input vector data, and a storage address of output vector data. The register unit may be further configured to store scalar data used in other operation processes. The start address of the input vector data and the storage address of the output vector data are addresses in the storing unit.

The control unit is configured to decode the vector operation instruction and to control an operation process of the vector operation instruction. In one implementation, the control unit is configured to read out the vector operation instruction prepared, to decode the vector operation instruction to generate a control signal, and to send the control signal to other units in the apparatus. The other units are configured to execute corresponding operations according to the control signal.

The transcendental function calculating unit is configured to execute a specified transcendental function operation on specified vector data under control of the control unit. The transcendental function calculating unit is a vector operation unit and configured to execute a same operation on all input vector data, that is, executing a same transcendental function operation for each element in the vector. It is to be noted that, the transcendental function calculating unit described in the disclosure is a customized transcendental function calculating unit and uses a method different from the traditional Taylor expansion to achieve the transcendental function operation. A coordinate rotation digital computer (CORDIC) scheme is used in a hardware circuit of the customized transcendental function calculating unit. The hardware circuit is configured to preprocess the input vector data whereby the CORDIC scheme is able to process the input vector data preprocessed, and is further configured to post-process an operation result of the CORDIC scheme, for example, symbolic operations or four arithmetic operations performed on the operation result output from the CORDIC scheme. In the embodiments of the disclosure, the preprocessing operation and post-processing operation of the transcendental function calculating unit are both implemented in hardware, thus providing a more complete hardware operation module and further improving a speed of the entire operation process.

The transcendental function calculating unit is configured to execute the following three operations: preprocessing, CORDIC calculation, and post-processing. A preprocessing module is included. The CORDIC scheme can efficiently calculate various transcendental function values under the premise of limited input ranges. Therefore, in the embodiments of the disclosure, before using the CORDIC scheme, input data are converted into a range that the CORDIC scheme can handle through a hardware circuit. Then a CORDIC calculating circuit executes corresponding operations on the input data converted to obtain an operation result, and the operation result will be sent to a post-processing circuit for processing and outputting.

In one implementation, the transcendental function calculating unit includes a preprocessing module, an iterative calculating module, and a post-processing module. The preprocessing module is configured to convert input vector data into a reasonable computable domain range. The iterative calculating module is configured to calculate, by using the CORDIC scheme, a transcendental function value of the input vector data converted. The post-processing module is configured to post-process the transcendental function value. In the embodiments of the disclosure, the preprocessing module, the iterative calculating module, and the post-processing module are all implemented in hardware.

In one implementation, the transcendental function calculating unit is implemented in the following hardware circuits (including but not limited): field programmable gate array (FPGA), coarse grained reconfigurable array (CGRA), application specific integrated circuit (ASIC), analog circuit, and memristor.

According to an implementation of the disclosure, the apparatus further includes an instruction cache unit. The instruction cache unit is configured to store a vector operation instruction to be executed. During execution of an instruction, it is also cached in the instruction cache unit. When execution of one instruction is completed, the instruction will be submitted.

According to an implementation of the disclosure, the control unit of the apparatus includes an instruction queue module. The instruction queue module is configured to store sequentially the decoded vector operation instruction(s) and to send the vector operation instruction(s) to a dependency relationship processing unit after acquiring the scalar data associated with the vector operation instruction(s).

According to an implementation of the disclosure, the control unit of the apparatus further includes the dependency relationship processing unit. The dependency relationship processing unit is configured to determine whether a dependency relationship between a current vector operation instruction and a previous operation instruction that has been partially executed exists, before the transcendental function calculating unit acquires the current vector operation instruction; that is, determine whether the current vector operation instruction and the previous operation instruction that has been partially access a same storage address of a vector. If yes, the dependency relationship processing unit is configured to store the current vector operation instruction in a storage queue module and to send the current vector operation instruction stored in the storage queue module to the transcendental function calculating unit after the previous vector operation instruction that has been partially executed is completed. Otherwise, the dependency relationship processing unit is configured to directly send the current vector operation instruction to the transcendental function calculating unit. In particular, when vector operation instructions access the scratchpad memory, a previous vector operation instruction and a current vector operation instruction may access a same storage space. To ensure the correctness of the execution result of the instruction, when detecting that there is a dependency relationship between the current vector operation instruction and data of the previous vector operation instruction, the current vector operation instruction should wait in the storage queue module until the dependency relationship is eliminated.

According to an implementation of the disclosure, the control unit of the apparatus further includes the storage queue module. The storage queue module includes an ordered queue. An instruction having a dependency relationship with data of the previous vector operation instruction that has been partially executed is stored in the ordered queue until the dependency relationship is eliminated. The storage queue module is configured to send the operation instruction to the transcendental function computing unit after the dependency relationship is eliminated.

According to an implementation of the disclosure, the apparatus further includes an input-output (IO) unit. The IO unit is configured to store vector data into the storing unit, or to acquire a result of the vector operation from the storing unit. The IO unit can read out vector data from a memory or write output vector data into the memory by directly accessing the storing unit.

According to an implementation of the disclosure, the instruction design of the present disclosure uses a single instruction to complete a transcendental function operation performed on vectors.

According to the embodiments of the disclosure, during executing a transcendental function operation on vectors, the apparatus fetches the instruction to decode, sends the instruction decoded to the instruction queue module for storing, and acquires parameters in the instruction according to the decoding result, where these parameters can be directly written in the operation field of the instruction or can be directly read out from a specified register according to a register number in the operation field of the instruction. The advantage of using the register to store parameters is that there is no need to change the instruction itself. That is, most loops can be achieved by using the instruction to change the values in the register. It is possible to greatly save the number of instructions required for solving some practical problems. After all operands are obtained, the dependency relationship processing unit determines whether a dependency relationship between data actually needed to be used by the instruction and data of the previous operation instruction exists, which determines whether the instruction can be immediately sent to the transcendental function calculating unit for executing. For example, once the instruction has the dependency relationship with the data of the previous operation instruction, the instruction will not be sent to the transcendental function calculating unit for executing until the previous operation instruction the instruction depends on is completely executed. In the customized transcendental function calculating unit, the instruction will be executed quickly, and the result, that is a generated random vector, is written back to an address provided by the instruction, indicating that the execution of the instruction is completed.

FIG. 2 is a schematic diagram illustrating a format of a transcendental function operation instruction according to an embodiment of the disclosure. As illustrated in FIG. 2, the transcendental function operation instruction includes an operation code and at least one operation field. The operation code is configured to indicate which transcendental function is to be executed. The operation field is configured to indicate data information indicated by the transcendental function operation instruction, where the data information includes an immediate and/or a register number. For example, to acquire a vector, a start address and a length of the vector can be acquired from a corresponding register according to the register number, and then the corresponding vector can be acquired from the storing unit according to the start address and the length of the vector.

The following describes several vector transcendental function operation instructions.

Exponential Operation Instruction (EXP). According to the instruction, the apparatus fetches vector data of a specified size from a specified address of a scratchpad memory. An exponential operation is executed on the vector data in the transcendental function calculating unit, that is, *Y*=*exp(X),* and an operation result is written back to a specified address of the scratchpad memory in the instruction.

Logarithmic Operation Instruction (LOG). According to the instruction, the apparatus fetches vector data of a specified size from a specified address of the scratchpad memory. A logarithmic operation is executed on the vector data in the transcendental function calculating unit, that is, *Y*=*log(X),* and an operation result is written back to a specified address of the scratchpad memory in the instruction.

Sinusoidal Operation Instruction (SIN). According to the instruction, the apparatus fetches vector data of a specified size from a specified address of the scratchpad memory. A sinusoidal operation is executed on the vector data in the transcendental function calculating unit, that is, *Y*=*sin(X),* and an operation result is written back to a specified address of the scratchpad memory in the instruction.

Cosine Operation Instruction (COS). According to the instruction, the apparatus fetches vector data of a specified size from a specified address of the scratchpad memory. A cosine operation is executed on the vector data in the transcendental function calculating unit, that is, *Y*=*cos(X),* and an operation result is written back to a specified address of the scratchpad memory in the instruction.

Tangent Operation Instruction (TAN). According to the instruction, the apparatus fetches vector data of a specified size from a specified address of the scratchpad memory. A tangent operation is executed on the vector data in the transcendental function calculating unit, that is, *Y*=*tan(X),* and an operation result is written back to a specified address of the scratchpad memory in the instruction.

Cotangent Operation Instruction (COT). According to the instruction, the apparatus fetches vector data of a specified size from a specified address of the scratchpad memory. A cotangent operation is executed on the vector data in the transcendental function calculating unit, that is, *Y*=*cot(X),* and an operation result is written back to a specified address of the scratchpad memory in the instruction.

Arcus Sine Operation Instruction (ARCSIN). According to the instruction, the apparatus fetches vector data of a specified size from a specified address of the scratchpad memory. An arcus sine operation is executed on the vector data in the transcendental function calculating unit, that is, *Y*= *arcsin(X),* and an operation result is written back to a specified address of the scratchpad memory in the instruction.

Arcus Cosine Operation Instruction (ARCCOS). According to the instruction, the apparatus fetches vector data of a specified size from a specified address of the scratchpad memory. An arcus cosine operation is executed on the vector data in the transcendental function calculating unit, that is, *Y*= *arccos(X),* and an operation result is written back to a specified address of the scratchpad memory in the instruction.

Arcus Tangent Operation Instruction (ARCTAN). According to the instruction, the apparatus fetches vector data of a specified size from a specified address of the scratchpad memory. An arcus tangent operation is executed on the vector data in the transcendental function calculating unit, that is, *Y*= *arctan(X),* and an operation result is written back to a specified address of the scratchpad memory in the instruction.

Arcus Cotangent Operation Instruction (ARCCOT). According to the instruction, the apparatus fetches vector data of a specified size from a specified address of the scratchpad memory. An arcus cotangent operation is executed on the vector data in the transcendental function calculating unit, that is, *Y*= *arccot(X),* and an operation result is written back to a specified address of the scratchpad memory in the instruction.

General-purpose CPUs do not provide this type of machine instructions. These machine instructions are usually implemented by higher layer library functions. Each library function contains a plurality of machine instructions. According to the present disclosure, the above vector transcendental function operation instructions are implemented through a hardware structure.

To describe objectives, technical solutions, and advantages of the embodiments of the present disclosure more clearly, the present disclosure will be further described in detail hereinafter with reference to the specific embodiments and in accordance with the accompanying drawings of the disclosure.

FIG. 3 is a schematic structural diagram illustrating an apparatus for executing a transcendental function operation on vectors according to an embodiment of the disclosure. As illustrated in FIG. 3, the apparatus includes an instruction fetching module, a decoding module, an instruction queue module, a scalar register file, a dependency relationship processing unit, the storage queue module, a transcendental function calculating unit, a scratchpad memory, and an input-output (IO) access module.

The instruction fetching module is configured to fetch a next instruction to be executed from a sequence of instructions and to send the instruction to the decoding module.

The decoding module is configured to decode the instruction and to send the instruction decoded to the instruction queue module.

The instruction queue module is configured to temporarily store the instruction decoded from the decoding module, to acquire data associated with the instruction from the instruction or a scalar register, where the data include a start address and a length of vector data, and some scalar constants, and to send the instruction to the dependency relationship processing unit after the data are acquired.

The scalar register file is configured to provide scalar registers used in the operation.

The dependency relationship processing unit is configured to handle a possible storage dependency relationship between the instruction and a previous instruction that has been partially executed. The vector operation instruction will access the scratchpad memory to acquire an operation vector, and a previous instruction and a current instruction may access a same storage space. To ensure the correctness of the execution result of the instruction, when detecting that the current instruction has a dependency relationship with data of the previous instruction, the current instruction may need to be sent to the storage queue module and wait until the dependency relationship is eliminated. That is, the dependency relationship processing unit is configured to detect whether a storage interval of input data of the current instruction and a storage interval of output data of the previous instruction that has been partially executed are overlapped, where the storage interval is determined according to the start address and the length of the vector data. If the storage interval of the input data of the current instruction and the storage interval of the output data of the previous instruction that has been partially executed are overlapped, it means that the instruction actually needs an execution result of the previous instruction as an input, so the instruction cannot start execution until the previous instruction that has been partially executed is completed. In this process, the instruction is actually stored in the storage queue module temporarily.

The storage queue module includes an ordered queue. The instruction having the dependency relationship with the data of the previous instruction is stored in the ordered queue until the dependency relationship is eliminated. The storage queue module is configured to send the instruction to the transcendental function computing unit after the dependency relationship is eliminated.

The transcendental function calculating unit is configured to execute a transcendental function operation including but not limited to an exponential operation, an logarithmic operation, a trigonometric function operation, and an inverse trigonometric function operation. All common transcendental functions are basically included in exponential functions, logarithmic functions, trigonometric functions, inverse trigonometric functions, and combinations of four arithmetic operations thereof. The transcendental function operation is achieved by a CORDIC scheme, which is an iterative calculating method. For a transcendental function f(x), one bit precision in a result can be calculated by one iteration, so for a result of 16-bit precision, it only needs to iterate 16 times at most to calculate the result. The transcendental function calculating unit further includes a preprocessing section and a post-processing section. The preprocessing section is configured to preprocess input data whereby the CORDIC scheme is able to process the input data. The post-processing section is configured to post-process an operation result of the CORDIC operation according to the characteristic of the transcendental function itself, for example, symbolic operations or four arithmetic operations performed on output data, that is, the operation result of the CORDIC scheme. Different from the related art where the preprocessing and the post-processing are usually completed by software, in the embodiments of the disclosure, the preprocessing and the post-processing are implemented by hardware circuits.

The scratchpad memory is a temporary storage apparatus special for vector data and can support vector data of different sizes. The scratchpad memory is configured to store vector data to be operated and operation results.

The IO access module is configured to read out data from the scratchpad memory or write data into the scratchpad memory by directly accessing the scratchpad memory.

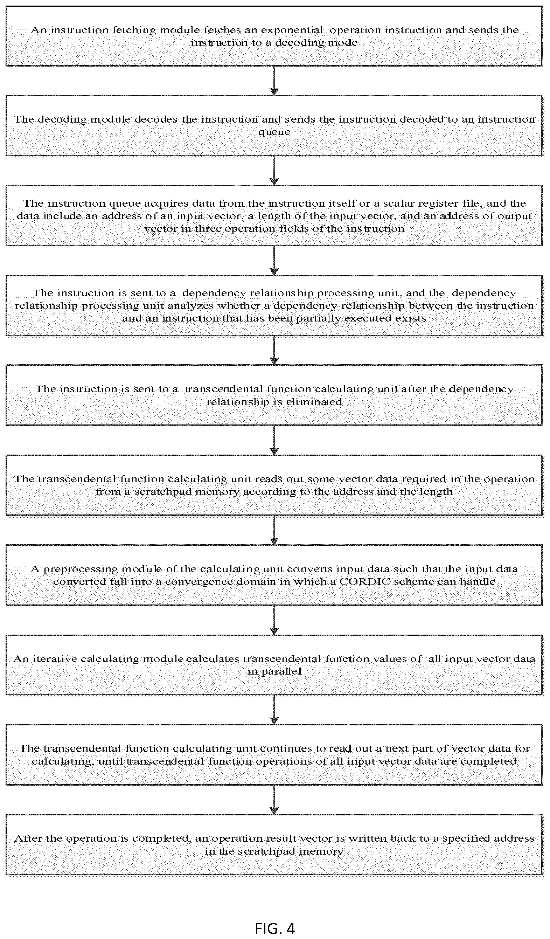

FIG. 4 is a flow chart illustrating a process that the apparatus executes a transcendental function operation instruction according to an embodiment of the disclosure. As illustrated in FIG. 4, the process of executing the transcendental function operation includes the following operations.

At S1, an instruction fetching module fetches the transcendental function operation instruction and sends the instruction to a decoding module.

At S2, the decoding module decodes the instruction and sends the instruction decoded to an instruction queue module.

At S3, the instruction queue module acquires required scalar data from an immediate or a register of the instruction, that is, data corresponding to an operation field of the instruction. The data include an address of an input vector, a length of the input vector, an address of an output vector, and constants the transcendental function operation required.

At S4, after the required scalar data are acquired, the instruction queue module sends the instruction to a dependency relationship processing unit.

At S5, the dependency relationship processing unit analyzes whether a dependency relationship between the instruction and a previous instruction that has been partially executed exists. If yes, the dependency relationship processing unit sends the instruction to a storage queue module to wait until the instruction has no dependency relationship with data of the previous instruction that has been partially executed, and then the instruction is sent to a transcendental function calculating unit by the storage queue module; otherwise, the dependency relationship processing unit directly sends the instruction to the transcendental function calculating unit.

At S6, the transcendental function calculating unit reads out some vector data required in the operation from a scratchpad memory via an input-output (IO) unit according to a storage address and a length of the input vector.

At S7, a preprocessing module of the transcendental function calculating unit converts input data such that the input data converted fall into a convergence domain in which a CORDIC scheme can handle.

At S8, an iterative calculating module of the transcendental function calculating unit calculates transcendental function values of the some vector data read out in parallel.

At S9, turning back to operation at S6, the transcendental function calculating unit continues to read out a next part of vector data for calculating until transcendental function operations of all input vector data are completed.

At S10, after the operation is completed, an operation result vector is written back to an output address of the vector in the scratchpad memory via the IO unit.

In summary, the apparatus for executing a transcendental function operation on vectors, cooperated with the corresponding instructions, can well solve more and more transcendental function calculating tasks for vectors in the current computer field, including excellent artificial neural network schemes. Compared with the related solutions, the present disclosure can have the advantages of convenient use, flexible vector length supported, and sufficient on-chip cache.

While the disclosure has been described in connection with certain embodiments, it is to be understood that the disclosure is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

## Claims

1. An apparatus for executing a transcendental function operation on each element in a vector, comprising:
a storing unit, configured to store vector data associated with a vector operation instruction;
a register unit, configured to store scalar data associated with the vector operation instruction;
a control unit, configured to decode the vector operation instruction and to control an operation process of the vector operation instruction; and
a transcendental function calculating unit, configured to execute a transcendental function operation on input vector data according to the vector operation instruction under control of the control unit;
the transcendental function calculating unit comprising a preprocessing section and an iterative calculating section, the preprocessing section being configured to preprocess the input vector data whereby a coordinate rotation digital computer, CORDIC, scheme is able to process the input vector data preprocessed, and the iterative calculating section being configured to execute an iterative operation on the input vector data preprocessed by using the CORDIC scheme to obtain result vector data,
wherein the scalar data stored in the register unit comprise a start address of the input vector data, a storage address of output vector data, and a length of the input vector data associated with the vector operation instruction; wherein the start address of the input vector data and the storage address of the output vector data are addresses in the storing unit.

2. The apparatus of claim 1, wherein the transcendental function calculating unit is implemented in hardware.

3. The apparatus of claim 1, wherein the storing unit is a scratchpad memory.

4. The apparatus of any of claims 1 to 3, the transcendental function calculating unit further comprising a post-processing section configured to post-process the result vector data output from the iterative calculating section.

5. The apparatus of claim 1, the control unit comprising an instruction queue module configured to store sequentially the vector operation instruction decoded and to acquire the scalar data associated with the vector operation instruction.

6. The apparatus of claim 1 or 5, the control unit comprising a dependency relationship processing unit configured to determine whether a dependency relationship between a current vector operation instruction and an operation instruction that has been partially executed exists, before the transcendental function calculating unit acquires the current vector operation instruction.

7. The apparatus of claim 1 or 5, the control unit comprising a storage queue module configured to:
temporarily store a current vector operation instruction when a dependency relationship between the current vector operation instruction and an operation instruction that has been partially executed exists; and
send the current vector operation instruction temporarily stored to the transcendental function calculating unit when the dependency relationship is eliminated.

8. The apparatus of any of claims 1 to 3 and 5, further comprising:
an instruction cache unit, configured to store a vector operation instruction to be executed; and
an input-output,IO, unit, configured to store in the storing unit the vector data associated with the vector operation instruction or to acquire an operation result of the vector operation instruction from the storing unit.

9. The apparatus of claim 8, wherein the storing unit is a scratchpad memory, wherein the IO unit is configured to read and write to the scratchpad memory by directly accessing the scratchpad memory.

10. The apparatus of claim 1, the vector operation instruction comprising:
an operation code, configured to indicate which transcendental function is to be executed; and
an operation field, comprising at least one of an immediate and a register number and configured to indicate the scalar data associated with the vector operation instruction;
the register number being configured to point to an address of the register unit.

11. The apparatus of any one of claims 1-10,
wherein the vector operation instruction comprises one from the list of: an Exponential Operation Instruction, EXP, a Logarithmic Operation Instruction, LOG, a Sinusoidal Operation Instruction, SIN, a Cosine Operation Instruction, COS, a Tangent Operation Instruction, TAN, a Cotangent Operation Instruction, COT, an Arcus Sine Operation Instruction, ARCSIN, an Arcus Cosine Operation Instruction, ARCCOS, an Arcus Tangent Operation Instruction, ARCTAN, and an Arcus Cotangent Operation Instruction, ARCCOT;
wherein the apparatus fetches, according to the vector operation instruction, vector data of a specified size from a specified address of the storing unit;
wherein an operation according to the vector operation instruction is executed on the vector data, X, in the transcendental function calculating unit, and wherein an operation result, Y, is written back to a specified address of the storing unit, the address being specified in the vector operation instruction;
wherein, for the case that the vector operations instruction comprises EXP, Y = exp(X);
wherein, for the case that the vector operations instruction comprises LOG, Y = log(X);
wherein, for the case that the vector operations instruction comprises SIN, Y = sin(X);
wherein, for the case that the vector operations instruction comprises COS, Y = cos(X);
wherein, for the case that the vector operations instruction comprises TAN, Y = tan(X);
wherein, for the case that the vector operations instruction comprises COT, Y = cot(X);
wherein, for the case that the vector operations instruction comprises ARCSIN, Y = arcsin(X);
wherein, for the case that the vector operations instruction comprises ARCCOS, Y = arccos(X);
wherein, for the case that the vector operations instruction comprises ARCTAN, Y = arctan(X);
wherein, for the case that the vector operations instruction comprises ARCCOT, Y = arccot(X).

12. A method for executing a transcendental function operation on each element in a vector, comprising:
storing, by a storing unit, vector data associated with a vector operation instruction;
storing, by a register unit, scalar data associated with the vector operation instruction;
decoding, by a control unit, the vector operation instruction and controlling an operation process of the vector operation instruction,
preprocessing, by the transcendental function calculating unit configured to execute a transcendental function operation on input vector data according to the vector operation instruction under control of the control unit, the input vector data whereby a coordinate rotation digital computer, CORDIC, scheme is able to process the input vector data subjected to preprocessing, executing, by an iterative calculating section of the transcendental function calculating unit, an iterative operation on the input vector data preprocessed by using the CORDIC scheme to obtain result vector data,
wherein the scalar data comprises start address of input vector data, a length of the input vector data, and a storage address of output vector data, wherein the method further comprises:
reading, by the transcendental function calculating unit, the input vector data from the storing unit according to the start address and the length of the input vector data,
storing, in the storing unit, the output vector data at the storage address.

13. A method of claim 12, further comprising post-processing, by a post-processing section of the transcendental function calculating unit, the result vector data output from the iterative calculating section to obtain output vector data.

14. A method according to claim 3, wherein the vector operation instruction comprising:
an operation code, configured to indicate which transcendental function is to be executed; and
an operation field, comprising at least one of an immediate and a register number and configured to indicate the scalar data associated with the vector operation instruction;
the register number being configured to point to an address of the register unit.

15. A method according to any one of claims 12-14,
wherein the vector operation instruction comprises one from the list of: an Exponential Operation Instruction, EXP, a Logarithmic Operation Instruction, LOG, a Sinusoidal Operation Instruction, SIN, a Cosine Operation Instruction, COS, a Tangent Operation Instruction, TAN, a Cotangent Operation Instruction, COT, an Arcus Sine Operation Instruction, ARCSIN, an Arcus Cosine Operation Instruction, ARCCOS, an Arcus Tangent Operation Instruction, ARCTAN, and an Arcus Cotangent Operation Instruction, ARCCOT;
the method further comprising the steps of:
fetching, according to the vector operation instruction, vector data of a specified size from a specified address of the storing unit;
executing, by the transcendental function calculating unit, an operation according to the vector operation instruction on the vector data, X;
writing back, by the transcendental function calculating unit, an operation result, Y, to a specified address of the storing unit, the address being specified in the vector operation instruction;
wherein, for the case that the vector operations instruction comprises EXP, Y = exp(X);
wherein, for the case that the vector operations instruction comprises LOG, Y = log(X);
wherein, for the case that the vector operations instruction comprises SIN, Y = sin(X);
wherein, for the case that the vector operations instruction comprises COS, Y = cos(X);
wherein, for the case that the vector operations instruction comprises TAN, Y = tan(X);
wherein, for the case that the vector operations instruction comprises COT, Y = cot(X);
wherein, for the case that the vector operations instruction comprises ARCSIN, Y = arcsin(X);
wherein, for the case that the vector operations instruction comprises ARCCOS, Y = arccos(X);
wherein, for the case that the vector operations instruction comprises ARCTAN, Y = arctan(X);
wherein, for the case that the vector operations instruction comprises ARCCOT, Y = arccot(X).

## Patentansprüche

1. Vorrichtung zum Ausführen einer transzendentalen Funktionsoperation an jedem Element in einem Vektor, umfassend:
eine Speichereinheit, die dafür konfiguriert ist, Vektordaten zu speichern, die einer Vektoroperationsanweisung zugeordnet sind;
eine Registereinheit, die dafür konfiguriert ist, skalare Daten zu speichern, die der Vektoroperationsanweisung zugeordnet sind;
eine Steuereinheit, die dafür konfiguriert ist, die Vektoroperationsanweisung zu dekodieren und einen Operationsprozess der Vektoroperationsanweisung zu steuern; und
eine Recheneinheit für transzendentale Funktion, die dafür konfiguriert ist, eine transzendentale Funktionsoperation an Eingabevektordaten gemäß der Vektoroperationsanweisung unter Steuerung der Steuereinheit auszuführen;
wobei die Recheneinheit für transzendentale Funktion einen Vorverarbeitungsabschnitt und einen iterativen Berechnungsabschnitt umfasst, wobei der Vorverarbeitungsabschnitt dafür konfiguriert ist, die Eingabevektordaten vorzuverarbeiten, wobei ein Koordinatenrotationsdigitalcomputer-, CORDIC, Schema dazu in der Lage ist, die vorverarbeiteten Eingabevektordaten zu verarbeiten, und der iterative Berechnungsabschnitt dafür konfiguriert ist, eine iterative Operation an den Eingabevektordaten, die unter Verwendung des CORDIC-Schemas vorverarbeitet wurden, auszuführen, um Ergebnisvektordaten zu erhalten,
wobei die skalaren Daten, die in der Registereinheit gespeichert sind, eine Startadresse der Eingabevektordaten, eine Speicheradresse der Ausgabevektordaten und eine Länge der Eingabevektordaten, die der Vektoroperationsanweisung zugeordnet ist, umfassen; wobei die Startadresse der Eingabevektordaten und die Speicheradresse der Ausgabevektordaten Adressen in der Speichereinheit sind.

2. Vorrichtung nach Anspruch 1, wobei die Recheneinheit für transzendentale Funktion in Hardware implementiert ist.

3. Vorrichtung nach Anspruch 1, wobei die Speichereinheit ein Scratchpad-Speicher ist.

4. Vorrichtung nach einem der Ansprüche 1 bis 3, wobei die Recheneinheit für transzendentale Funktion ferner einen Nachverarbeitungsabschnitt umfasst, der dafür konfiguriert ist, die Ergebnisvektordatenausgabe aus dem iterativen Berechnungsabschnitt nachzuverarbeiten.

5. Vorrichtung nach Anspruch 1, wobei die Steuereinheit ein Anweisungswarteschlangenmodul umfasst, das dafür konfiguriert ist, die dekodierte Vektoroperationsanweisung sequenziell zu speichern und die skalaren Daten, die der Vektoroperationsanweisung zugeordnet sind, zu erfassen.

6. Vorrichtung nach Anspruch 1 oder 5, wobei die Steuereinheit eine Verarbeitungseinheit für Abhängigkeitsbeziehung umfasst, die dafür konfiguriert ist, zu bestimmen, ob eine Abhängigkeitsbeziehung zwischen einer aktuellen Vektoroperationsanweisung und einer Operationsanweisung, die teilweise ausgeführt wurde, existiert bevor die Recheneinheit für transzendentale Funktion die aktuelle Vektoroperationsanweisung erfasst.

7. Vorrichtung nach Anspruch 1 oder 5, wobei die Steuereinheit ein Speicherwarteschlangenmodul umfasst, das dafür konfiguriert ist:
eine aktuelle Vektoroperationsanweisung temporär zu speichern, wenn eine Abhängigkeitsbeziehung zwischen der aktuellen Vektoroperationsanweisung und einer Operationsanweisung, die teilweise ausgeführt wurde, existiert; und
die aktuelle Vektoroperationsanweisung, die temporär zu der Recheneinheit für transzendentale Funktion gespeichert wurde, zu senden, wenn die Abhängigkeitsbeziehung eliminiert ist.

8. Vorrichtung nach einem der Ansprüche 1 bis 3 und 5, ferner umfassend:
eine Anweisungszwischenspeichereinheit, die dafür konfiguriert ist, eine auszuführende Vektoroperationsanweisung zu speichern; und
eine Eingabe-Ausgabe-, IO, Einheit, die dafür konfiguriert ist, die Vektordaten, die der Vektoroperationsanweisung zugeordnet sind, in der Speichereinheit zu speichern, oder ein Operationsergebnis der Vektoroperationsanweisung von der Speichereinheit zu erfassen.

9. Vorrichtung nach Anspruch 8, wobei die Speichereinheit ein Scratchpad-Speicher ist, wobei die IO-Einheit dafür konfiguriert ist, durch direkten Zugriff auf den Scratchpad-Speicher in den Scratchpad-Speicher zu schreiben und aus ihm zu lesen.

10. Vorrichtung nach Anspruch 1, wobei die Vektoroperationsanweisung umfasst:
einen Operationscode, der dafür konfiguriert ist, anzugeben, welche transzendentale Funktion auszuführen ist; und
ein Operationsfeld, das eine unmittelbare und/oder eine Registernummer umfasst und dafür konfiguriert ist, die skalaren Daten, die der Vektoroperationsanweisung zugeordnet sind, anzugeben;
wobei die Registernummer dafür konfiguriert ist, auf eine Adresse der Registereinheit zu verweisen.

11. Vorrichtung nach einem der Ansprüche 1 bis 10,
wobei die Vektoroperationsanweisung eines von der Liste umfasst:
eine exponentielle Operationsanweisung, EXP, eine logarithmische Operationsanweisung, LOG, eine Sinus-Operationsanweisung, SIN, eine Cosinus-Operationsanweisung, COS, eine Tangenten-Operationsanweisung, TAN, eine Cotangenten-Operationsanweisung, COT, eine Arcus-Sinus-Operationsanweisung, ARCSIN, eine Arcus-Cosinus-Operationsanweisung, ARCCOS, eine Arcus-Tangenten-Operationsanweisung, ARCTAN, und eine Arcus-Cotangenten-Operationsanweisung, ARCCOT;
wobei die Vorrichtung, gemäß der Vektoroperationsanweisung, Vektordaten einer spezifizierten Größe von einer spezifizierten Adresse der Speichereinheit abruft;
wobei eine Operation gemäß der Vektoroperationsanweisung an den Vektordaten, X, in der Recheneinheit für transzendentale Funktion ausgeführt wird, und wobei ein Operationsergebnis, Y, zu einer spezifizierten Adresse der Speichereinheit zurückgeschrieben wird, wobei die Adresse in der Vektoroperationseinheit spezifiziert ist;
wobei, für den Fall, dass die Vektoroperationsanweisung EXP umfasst, Y = exp(X);
wobei, für den Fall, dass die Vektoroperationsanweisung LOG umfasst, Y = log(X);
wobei, für den Fall, dass die Vektoroperationsanweisung SIN umfasst, Y = sin(X);
wobei, für den Fall, dass die Vektoroperationsanweisung COS umfasst, Y = cos(X);
wobei, für den Fall, dass die Vektoroperationsanweisung TAN umfasst, Y = tan(X);
wobei, für den Fall, dass die Vektoroperationsanweisung COT umfasst, Y = cot(X);
wobei, für den Fall, dass die Vektoroperationsanweisung ARCSIN umfasst, Y = arcsin(X);
wobei, für den Fall, dass die Vektoroperationsanweisung ARCCOS umfasst, Y = arccos(X);
wobei, für den Fall, dass die Vektoroperationsanweisung ARCTAN umfasst, Y = arctan(X);
wobei, für den Fall, dass die Vektoroperationsanweisung ARCCOT umfasst, Y = arccot(X).

12. Verfahren zum Ausführen einer transzendentalen Funktionsoperation an jedem Element in einem Vektor, umfassend:
Speichern, durch eine Speichereinheit, von Vektordaten, die einer Vektoroperationsanweisung zugeordnet sind;
Speichern, durch eine Registereinheit, von skalaren Daten, die der Vektoroperationsanweisung zugeordnet sind;
Dekodieren, durch eine Steuereinheit, der Vektoroperationsanweisung und Steuern eines Operationsprozesses der Vektoroperationsanweisung,
Vorverarbeiten, durch die Recheneinheit für transzendentale Funktion, die dafür konfiguriert ist, eine transzendentale Funktionsoperation an Eingabevektordaten gemäß der Vektoroperationsanweisung unter Steuerung der Steuereinheit auszuführen, der Eingabevektordaten, wobei ein Koordinatenrotationsdigitalcomputer-, CORDIC, Schema dazu in der Lage ist, die Eingabevektordaten, die dem Vorverarbeiten unterzogen werden, zu verarbeiten, Ausführen, durch einen iterativen Berechnungsabschnitt der Recheneinheit für transzendentale Funktion, einer iterativen Operation an den Eingabevektordaten, die unter Verwendung des CORDIC-Schemas vorverarbeitet wurden, um Ergebnisvektordaten zu erhalten,
wobei die skalaren Daten Startadresse der Eingabevektordaten, eine Länge der Eingabevektordaten und eine Speicheradresse der Ausgabevektordaten umfassen, wobei das Verfahren ferner umfasst:
Lesen, durch die Recheneinheit für transzendentale Funktion, der Eingabevektordaten aus der Speichereinheit gemäß der Startadresse und der Länge der Eingabevektordaten,
Speichern, in der Speichereinheit, der Ausgabevektordaten an der Speicheradresse.

13. Verfahren nach Anspruch 12, ferner Nachverarbeiten, durch einen Nachverarbeitungsabschnitt der Recheneinheit für transzendentale Funktion, der Ergebnisvektordatenausgabe aus dem iterativen Berechnungsabschnitt umfassend, um Ausgabevektordaten zu erhalten.

14. Verfahren nach Anspruch 3, wobei die Vektoroperationsanweisung umfasst:
einen Operationscode, der dafür konfiguriert ist, anzugeben, welche transzendentale Funktion auszuführen ist; und
ein Operationsfeld, das eine unmittelbare und/oder eine Registernummer umfasst und dafür konfiguriert ist, die skalaren Daten, die der Vektoroperationsanweisung zugeordnet sind, anzugeben;
wobei die Registernummer dafür konfiguriert ist, auf eine Adresse der Registereinheit zu verweisen.

15. Verfahren nach einem der Ansprüche 12 bis 14,
wobei die Vektoroperationsanweisung eines von der Liste umfasst:
eine exponentielle Operationsanweisung, EXP, eine logarithmische Operationsanweisung, LOG, eine Sinus-Operationsanweisung, SIN, eine Cosinus-Operationsanweisung, COS, eine Tangenten-Operationsanweisung, TAN, eine Cotangenten-Operationsanweisung, COT, eine Arcus-Sinus-Operationsanweisung, ARCSIN, eine Arcus-Cosinus-Operationsanweisung, ARCCOS, eine Arcus-Tangenten-Operationsanweisung, ARCTAN, und eine Arcus-Cotangenten-Operationsanweisung, ARCCOT;
wobei das Verfahren ferner die Schritte umfasst:
Abrufen, gemäß der Vektoroperationsanweisung, von Vektordaten einer spezifizierten Größe von einer spezifizierten Adresse der Speichereinheit;
Ausführen, durch die Recheneinheit für transzendentale Funktion, einer Operation gemäß der Vektoroperationsanweisung an den Vektordaten, X;
Zurückschreiben, durch die Recheneinheit für transzendentale Funktion, eines Operationsergebnisses, Y, zu einer spezifizierten Adresse der Speichereinheit, wobei die Adresse in der Vektoroperationsanweisung gespeichert ist;
wobei, für den Fall, dass die Vektoroperationsanweisung EXP umfasst, Y = exp(X);
wobei, für den Fall, dass die Vektoroperationsanweisung LOG umfasst, LOG Y = log(X);
wobei, für den Fall, dass die Vektoroperationsanweisung SIN umfasst, Y = sin(X);
wobei, für den Fall, dass die Vektoroperationsanweisung COS umfasst, Y = cos(X);
wobei, für den Fall, dass die Vektoroperationsanweisung TAN umfasst, Y = tan(X);
wobei, für den Fall, dass die Vektoroperationsanweisung COT umfasst, Y = cot(X);
wobei, für den Fall, dass die Vektoroperationsanweisung ARCSIN umfasst, Y = arcsin(X);
wobei, für den Fall, dass die Vektoroperationsanweisung ARCCOS umfasst, Y = arccos(X);
wobei, für den Fall, dass die Vektoroperationsanweisung ARCTAN umfasst, Y = arctan(X);
wobei, für den Fall, dass die Vektoroperationsanweisung ARCCOT umfasst, Y = arccot(X).

## Revendications

1. Appareil pour exécuter une opération de fonction transcendante sur chaque élément dans un vecteur, comprenant :
une unité de stockage, configurée pour stocker des données vectorielles associées à une instruction d'opération vectorielle ;
une unité de registre, configurée pour stocker des données scalaires associées à l'instruction d'opération vectorielle ;
une unité de commande, configurée pour décoder l'instruction d'opération vectorielle et pour commander un processus d'opération de l'instruction d'opération vectorielle ; et
une unité de calcul de fonction transcendante, configurée pour exécuter une opération de fonction transcendante sur des données vectorielles d'entrée conformément à l'instruction d'opération vectorielle sous le contrôle de l'unité de commande ;
l'unité de calcul de fonction transcendante comprenant une section de prétraitement et une section de calcul itératif, la section de prétraitement étant configurée pour prétraiter les données vectorielles d'entrées de telle manière qu'un schéma d'ordinateur numérique à rotation de coordonnées, CORDIC, puisse traiter les données vectorielles d'entrée prétraitées, et la section de calcul itératif étant configurée pour exécuter une opération itérative sur les données vectorielles d'entrée prétraitées en utilisant le schéma CORDIC pour obtenir des données vectorielles de résultat,
dans lequel les données scalaires stockées dans l'unité de registre comprennent une adresse de début des données vectorielles d'entrée, une adresse de stockage de données vectorielles de sortie, et une longueur des données vectorielles d'entrée associées à l'instruction d'opération vectorielle ; dans lequel l'adresse de début des données vectorielles d'entrée et l'adresse de stockage des données vectorielles de sortie sont des adresses dans l'unité de stockage.

2. Appareil selon la revendication 1, dans lequel l'unité de calcul de fonction transcendante est mise en oeuvre dans un matériel.

3. Appareil selon la revendication 1, dans lequel l'unité de stockage est une mémoire de travail.

4. Appareil selon l'une quelconque des revendications 1 à 3, l'unité de calcul de fonction transcendante comprenant en outre une section de post-traitement configurée pour post-traiter les données vectorielles de résultat délivrées depuis la section de calcul itératif.

5. Appareil selon la revendication 1, l'unité de commande comprenant un module de file d'attente d'instruction configuré pour stocker séquentiellement l'instruction d'opération vectorielle décodée et pour acquérir les données scalaires associées à l'instruction d'opération vectorielle.

6. Appareil selon la revendication 1 ou 5, l'unité de commande comprenant une unité de traitement de relation de dépendance configurée pour déterminer s'il existe une relation de dépendance entre une instruction d'opération vectorielle courante et une instruction d'opération qui a été partiellement exécutée, avant que l'unité de calcul de fonction transcendante n'acquière l'instruction d'opération vectorielle courante.

7. Appareil selon la revendication 1 ou 5, l'unité de commande comprenant un module de file d'attente de stockage configuré pour :
stocker provisoirement une instruction d'opération vectorielle courante lorsqu'il existe une relation de dépendance entre l'instruction d'opération vectorielle courante et une instruction d'opération qui a été partiellement exécutée ; et
envoyer l'instruction d'opération vectorielle courante provisoirement stockée à l'unité de calcul de fonction transcendante lorsque la relation de dépendance est éliminée.

8. Appareil selon l'une quelconque des revendications 1 à 3 et 5, comprenant en outre :
une unité de mémoire cache d'instruction, configurée pour stocker une instruction d'opération vectorielle à exécuter ; et
une unité d'entrée-sortie, IO, configurée pour stocker, dans l'unité de stockage, les données vectorielles associées à l'instruction d'opération vectorielle ou pour acquérir un résultat d'opération de l'instruction d'opération vectorielle depuis l'unité de stockage.

9. Appareil selon la revendication 8, dans lequel l'unité de stockage est une mémoire de travail, dans lequel l'unité IO est configurée pour lire et écrire dans la mémoire de travail en accédant directement à la mémoire de travail.

10. Appareil selon la revendication 1, l'instruction d'opération vectorielle comprenant :
un code d'opération, configuré pour indiquer quelle fonction transcendante doit être exécutée ; et
un champ d'opération, comprenant au moins l'un parmi un numéro immédiat et un numéro de registre et configuré pour indiquer les données scalaires associée à l'instruction d'opération vectorielle ;
le numéro de registre étant configuré pour pointer vers une adresse de l'unité de registre.

11. Appareil selon l'une quelconque des revendications 1 à 10,
dans lequel l'instruction d'opération vectorielle comprend l'une dans la liste de : une instruction d'opération exponentielle, EXP, une instruction d'opération logarithmique, LOG, une instruction d'opération de sinus, SIN, une instruction d'opération de cosinus, COS, une instruction d'opération de tangente, TAN, une instruction d'opération de cotangente, COT, une instruction d'opération d'arc sinus, ARCSIN, une instruction d'opération d'arc cosinus, ARCCOS, une instruction d'opération d'arc tangente, ARCTAN, et une instruction d'opération d'arc cotangente, ARCCOT ;
dans lequel l'appareil récupère, conformément à l'instruction d'opération vectorielle, des données vectorielles d'une taille spécifiée depuis une adresse spécifiée de l'unité de stockage ;
dans lequel une opération conformément à l'instruction d'opération vectorielle est exécutée sur les données vectorielles, X, dans l'unité de calcul de fonction transcendante, et dans lequel un résultat d'opération, Y, est réécrit à une adresse spécifiée de l'unité de stockage, l'adresse étant spécifiée dans l'instruction d'opération vectorielle ;
dans lequel, dans le cas où l'instruction d'opération vectorielle comprend EXP, Y = exp(X) ;
dans lequel, dans le cas où l'instruction d'opération vectorielle comprend LOG, Y = log(X) ;
dans lequel, dans le cas où l'instruction d'opération vectorielle comprend SIN, Y = sin(X) ;
dans lequel, dans le cas où l'instruction d'opération vectorielle comprend COS, Y = cos(X) ;
dans lequel, dans le cas où l'instruction d'opération vectorielle comprend TAN, Y = tan(X) ;
dans lequel, dans le cas où l'instruction d'opération vectorielle comprend COT, Y = cot(X) ;
dans lequel, dans le cas où l'instruction d'opération vectorielle comprend ARCSIN, Y = arcsin(X) ;
dans lequel, dans le cas où l'instruction d'opération vectorielle comprend ARCCOS, Y = arccos(X) ;
dans lequel, dans le cas où l'instruction d'opération vectorielle comprend ARCTAN, Y = arctan(X) ;
dans lequel, dans le cas où l'instruction d'opération vectorielle comprend ARCCOT, Y = arccot(X).

12. Procédé pour exécuter une opération de fonction transcendante sur chaque élément dans un vecteur, comprenant :
le stockage, par une unité de stockage, de données vectorielles associées à une instruction d'opération vectorielle ;
le stockage, par une unité de registre, de données scalaires associées à l'instruction d'opération vectorielle ;
le décodage, par une unité de commande, de l'instruction d'opération vectorielle et la commande d'un processus d'opération de l'instruction d'opération vectorielle ;
le prétraitement, par l'unité de calcul de fonction transcendante configurée pour exécuter une opération de fonction transcendante sur des données vectorielles d'entrée conformément à l'instruction d'opération vectorielle sous le contrôle de l'unité de commande, des données vectorielles d'entrée de telle manière qu'un schéma d'ordinateur numérique à rotation de coordonnées, CORDIC, puisse traiter les données vectorielles d'entrée soumises au prétraitement, en exécutant, par une section de calcul itératif de l'unité de calcul de fonction transcendante, une opération itérative sur les données vectorielles d'entrée prétraitées en utilisant le schéma CORDIC pour obtenir des données vectorielles de résultat,
dans lequel les données scalaires comprennent une adresse de début de données vectorielles d'entrée, une longueur des données vectorielles d'entrée, et une adresse de stockage de données vectorielles de sortie, dans lequel le procédé comprend en outre :
la lecture, par l'unité de calcul de fonction transcendante, des données vectorielles d'entrée depuis l'unité de stockage conformément à l'adresse de début et à la longueur des données vectorielles d'entrée,
le stockage, dans l'unité de stockage, des données vectorielles de sortie à l'adresse de stockage.

13. Procédé selon la revendication 12, comprenant en outre le post-traitement, par une section de post-traitement de l'unité de calcul de fonction transcendante, des données vectorielles de résultat délivrées depuis la section de calcul itératif pour obtenir des données vectorielles de sortie.

14. Procédé selon la revendication 3, dans lequel l'instruction d'opération vectorielle comprend :
un code d'opération, configuré pour indiquer quelle fonction transcendante doit être exécutée ; et
un champ d'opération, comprenant au moins l'un parmi un numéro immédiat et un numéro de registre et configuré pour indiquer les données scalaires associée à l'instruction d'opération vectorielle ;
le numéro de registre étant configuré pour pointer vers une adresse de l'unité de registre.

15. Procédé selon l'une quelconque des revendications 12 à 14,
dans lequel l'instruction d'opération vectorielle comprend l'une dans la liste de : une instruction d'opération exponentielle, EXP, une instruction d'opération logarithmique, LOG, une instruction d'opération de sinus, SIN, une instruction d'opération de cosinus, COS, une instruction d'opération de tangente, TAN, une instruction d'opération de cotangente, COT, une instruction d'opération d'arc sinus, ARCSIN, une instruction d'opération d'arc cosinus, ARCCOS, une instruction d'opération d'arc tangente, ARCTAN, et une instruction d'opération d'arc cotangente, ARCCOT ;
le procédé comprenant en outre les étapes de :
la récupération, conformément à l'instruction d'opération vectorielle, de données vectorielles d'une taille spécifiée depuis une adresse spécifiée de l'unité de stockage ;
l'exécution, par l'unité de calcul de fonction transcendante, d'une opération conformément à l'instruction d'opération vectorielle sur les données vectorielles, X ;
la réécriture, par l'unité de calcul de fonction transcendante, d'un résultat d'opération, Y, à une adresse spécifiée de l'unité de stockage, l'adresse étant spécifiée dans l'instruction d'opération vectorielle ;
dans lequel, dans le cas où l'instruction d'opération vectorielle comprend EXP, Y = exp(X) ;
dans lequel, dans le cas où l'instruction d'opération vectorielle comprend LOG, Y = log(X) ;
dans lequel, dans le cas où l'instruction d'opération vectorielle comprend SIN, Y = sin(X) ;
dans lequel, dans le cas où l'instruction d'opération vectorielle comprend COS, Y = cos(X) ;
dans lequel, dans le cas où l'instruction d'opération vectorielle comprend TAN, Y = tan(X) ;
dans lequel, dans le cas où l'instruction d'opération vectorielle comprend COT, Y = cot(X) ;
dans lequel, dans le cas où l'instruction d'opération vectorielle comprend ARCSIN, Y = arcsin(X) ;
dans lequel, dans le cas où l'instruction d'opération vectorielle comprend ARCCOS, Y = arccos(X) ;
dans lequel, dans le cas où l'instruction d'opération vectorielle comprend ARCTAN, Y = arctan(X) ;
dans lequel, dans le cas où l'instruction d'opération vectorielle comprend ARCCOT, Y = arccot(X).
